(19) Europäisches Patentamt
European Patent Office
Office européen des brevets

(11) **EP 3 903 556 B1**

(12) **EUROPEAN PATENT SPECIFICATION**

(45) Date of publication and mention
of the grant of the patent:
**13.08.2025 Bulletin 2025/33**

(51) International Patent Classification (IPC):
***A01B 69/04*** (2006.01)     ***G05D 1/00*** (2024.01)

(52) Cooperative Patent Classification (CPC):
**A01B 69/008; G05D 1/0219; G05D 1/0278**

(21) Application number: **21170949.8**

(22) Date of filing: **28.04.2021**

(54) **METHODS FOR PATH PLANNING FOR MULTI-SEGMENT TURNS**

VERFAHREN ZUR WEGEPLANUNG FÜR MEHRSEGMENTKURVEN

PROCÉDÉS DE PLANIFICATION DES TRAJECTOIRES DE VIRAGES À SEGMENTS MULTIPLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.04.2020 US 202016863049**
**30.04.2020 US 202016863056**

(43) Date of publication of application:
**03.11.2021 Bulletin 2021/44**

(73) Proprietor: **PTx Trimble LLC**
**Westminster, CO 80021 (US)**

(72) Inventors:
• **KAKKAR, Shantnu**
**Sunnyvale 94085 (US)**
• **SANTAMARIA, Juan Carlos**
**Sunnyvale 94085 (US)**
• **CREABY, Justin**
**Sunnyvale 94085 (US)**
• **SIGHTS, Brandon**
**Sunnyvale 94085 (US)**

(74) Representative: **AGCO Intellectual Property Department**
**AGCO Limited**
**Abbey Park Stoneleigh**
**Kenilworth CV8 2TQ (GB)**

(56) References cited:
**EP-A1- 3 146 825      US-A1- 2017 144 702**
**US-A1- 2019 146 513**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

FIELD

This disclosure relates to methods of path planning for an autonomous vehicle.

BACKGROUND

Engineering vehicles such as tractors are widely used in agriculture and construction. For example, a variety of farm implements may be towed behind or mounted on a tractor to perform various agricultural tasks, such as plowing, irrigation, fertilizer and pesticide spraying, seed spraying, harvesting, and the like. Autonomous or semi-autonomous tractors are used for precision agriculture. As another example, compactors may be used to create a level grade in construction projects. Various path planning algorithms may be used to guide an autonomous vehicle. US 2019/146513 A1 and US 2017/144702 A1 disclose methods for planning two- and three-segment turns. These methods do not disclose initial segments for moving the vehicle to the beginning of the turn and the according gear changes after each segment. An end-of-row-turn (EORT) path planner may automatically calculate the best possible path to turn the vehicle around from a current swath and approach the next swath. The goals of an EORT path planner may include producing a trajectory that saves time and fuel cost, and reduces damage to crops or avoids other machines and structures.

SUMMARY

According to the invention, claims 1 and 8 provide methods of path planning for an autonomous vehicle to make a turn.

BRIEF DESCRIPTION OF THE DRAWINGS

FIG. 1 illustrates an exemplary field.

FIG. 2A illustrates an example of a U-shaped one-segment turn.

FIGS. 2B and 2C illustrate some examples of bulb-shaped one-segment turns.

FIGS. 3A - 3C illustrate some examples of two-segment turns.

FIGS. 4A - 4C illustrate some additional examples of two-segment turns.

FIGS. 5A and 5B illustrate some examples of three-segment turns.

FIGS. 6A and 6B illustrate some examples of one-segment headland-following (HF) turns.

FIGS. 7A and 7B illustrate some examples of two-segment HF turns.

FIGS. 8A - 8C illustrate some examples of three-segment HF turns.

FIG. 9A illustrates an exemplary one-segment HF turn with the move-to-start-of-turn (MST) feature.

FIG. 9B illustrates an exemplary two-segment HF turn with the MST feature.

FIG. 10 illustrates an exemplary two-segment turn that follows a headland pattern with the move-to-end-of-swath-before-turn (MESBT) feature according to some embodiments.

FIG. 11 illustrates an exemplary three-segment HF turn with both the MESBT feature and the move-to-beginning-of-next-swath-after-turn (MBSAT) feature according to some embodiments.

FIG. 12 illustrates some exemplary two-segment turns with the turn-within-boundary (TWB) option turned on and off, respectively.

FIGS. 13A and 13B illustrate exemplary one-segment turns for curved swaths.

FIGS. 13C and 13D illustrate exemplary one-segment turns for non-parallel swaths.

FIG. 14 shows an exemplary user interface (UI) for a user to select a desired type of turn according to some embodiments.

FIGS. 15A and 15B illustrate schematically a vehicle model according to some embodiments.

FIGS. 16A - 16D illustrate four types of trajectory optimization according to some embodiments.

FIG. 17 shows a simplified diagram of a system for an autonomous vehicle according to some embodiments.

FIG. 18 is a simplified flowchart illustrating a method of path planning for an autonomous vehicle to make a turn.

FIG. 19 is a simplified flowchart illustrating a method of path planning for an autonomous vehicle to make a turn.

FIG. 20 is a simplified flowchart illustrating a method of path planning for an autonomous vehicle to make a turn.

DETAILED DESCRIPTION

Embodiments of the present invention provide path planning to enable an autonomous vehicle to make a turn from one swath to another swath in an optimal amount of time and minimal travel distance, with minimal crop damage and/or avoiding obstacles (e.g., avoiding other machines, equipment, and structures on a construction site). In some embodiments, a user may be able to select a multi-segment turn, in which the vehicle may transition from a forward segment (i.e., the vehicle moving in the direction it is facing) to a reverse segment (i.e., the vehicle moving in an opposite direction from the direction it is facing), or vice versa. In some embodiments, the user may be able to select a headland-following (HF) turn, in which at least a portion of the trajectory of the turn follows a guidance line in the headland (see definitions of "headland" and "guidance line" below). The path planning algorithms are applicable to curved guidance lines, as well as straight guidance lines. They are also applicable to curved swaths as well as straight swaths, and parallel swaths as well as non-parallel swaths.

The term "geofence" may refer to a geographical boundary of a work area (e.g., an agricultural field, a construction site, and the like) that no part of the vehicle is permitted to go beyond. The term "boundary" may refer to any polygon that is either identical to the geofence or is inwardly offset from the geofence. For example, a farmer may drive the vehicle around the crop rows to record a boundary of the work area. In construction applications, information of the boundary may be available by construction surveys and the site design. Information of the boundary may also be obtained by manually walking up the boundary, by using an autonomous ground vehicle (AGV), or the like. The boundary information may be input to a path planner for algorithmic computation. The boundary may be used as the geofence. The term "headland" may refer to the region between the geofence and a second boundary inwardly offset from the geofence.

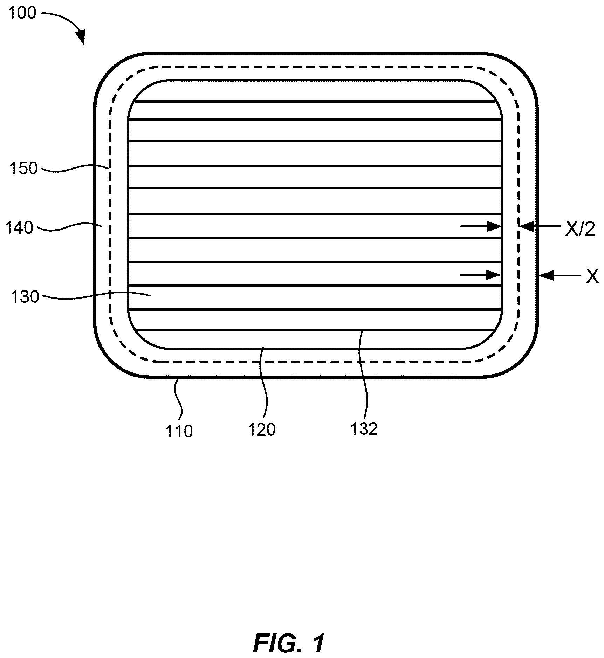

FIG. 1 illustrates an exemplary work area 100. The work area 100 has a boundary or geofence 110. A second boundary 120 is inwardly offset from the geofence 110. The region inside the second boundary 120 may be the cropped area 130 with many swaths 132. The region between the geofence 110 and the second boundary 120 may be referred to herein as the headland 140. The geofence 110 may be referred to as the outer boundary of the headland 140. The second boundary 120 may be referred to as the inner boundary of the headland 140 or as the headland boundary. The offset distance between the geofence 110 and the second boundary 120 may be referred to as the width of the headland 140. A headland 140 may have a width that is an integer multiple of the implement width X being used. For instance, in the example illustrated in FIG. 1, the width of the headland is equal to the implement width X.

The term "headland pattern" may refer to a guidance line 150 inside the headland 140 that may be used as a route for a vehicle to traverse along to fill the headland 140. For instance, in the example illustrated in FIG. 1, the guidance line 150 may be offset from the headland boundary 120 by a distance that is equal to one half of the implement width X. There may be multiple guidance lines depending on the relationship between the width of the headland 140 and the implement width X.

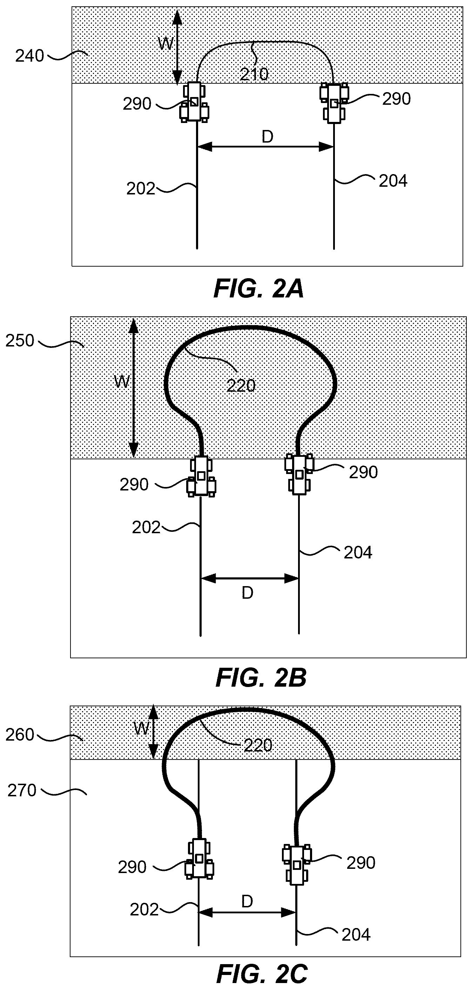

When an autonomous vehicle needs to make an end-of-row turn to switch from a current swath to a next swath, the trajectory of the turn may follow a U-shape or a bulb-shape. FIG. 2A illustrates an example of a U-shaped turn. The vehicle 290 is moving in the forward direction (i.e., in the direction it is facing) on the current swath 202 before the turn. The vehicle 290 continue to move in the forward direction along the U-shaped trajectory 210 of the turn to reach the next swath 204. In order to avoid or minimize crop damage, it may be desirable that the trajectory 210 of the turn is confined to the headland 240 if possible. The U-shaped turn may be possible when the distance D between the current swath 202 and the next swath 204 is wide enough.

When the distance D between the current swath 202 and the next swath 204 is not wide enough, the vehicle 290 may need to make a bulb-shaped turn, as illustrated in FIG. 2B. Here, along the trajectory 220 of the turn, the vehicle 290 first turns slightly to the left away from the next swath 204, then turns around and overshoot to the right slightly, before reaching the next swath 204. In order for the trajectory 220 to be confined to the headland 250, the bulb-shaped turn may require a wider width W of the headland 250 as compared to the U-shaped turn illustrated in FIG. 2A. As illustrated in FIG. 2C, for a narrower headland 260, some parts of the trajectory 220 may traverse the crop area 270, and therefore may cause more damage to the crop.

The U-shaped turn illustrated in FIG. 2A and the bulb-shaped turn illustrated in FIGS. 2B and 2C may be referred to as one-segment turn type, since the vehicle 290 stays in the same gear (e.g., the forward gear) along the trajectory of the turn.

**Multi-Segment Turns**

According to some embodiments, a path planner may allow multi-segment turn types. A trajectory of a multi-segment turn may include two or more segments, in which the vehicle may switch from the forward gear to the reverse gear, or vice versa, as it transitions from one segment to a next segment.

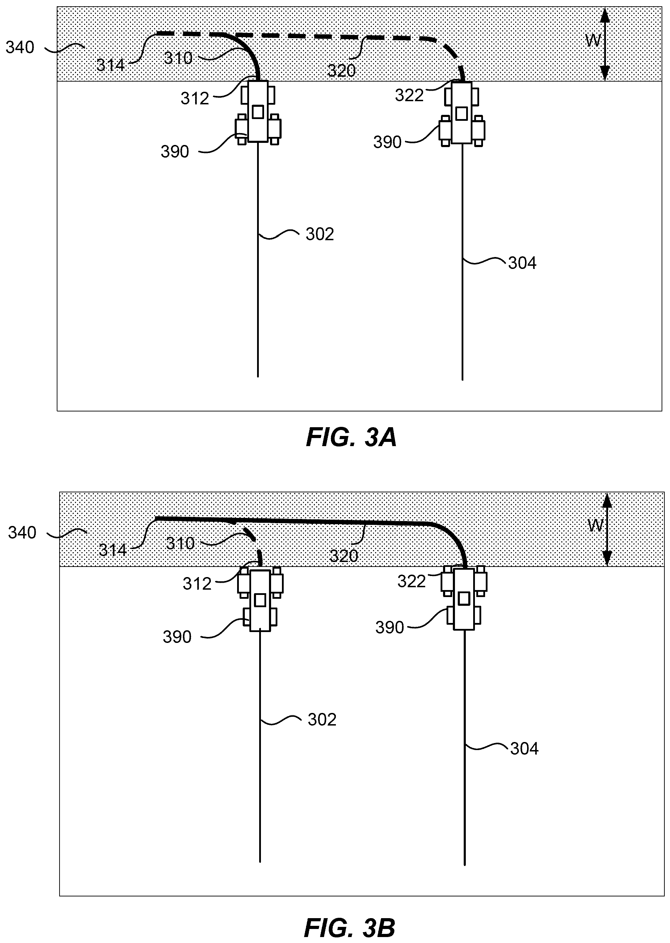

FIG. 3A illustrates an exemplary two-segment turn. A vehicle 390 is making the turn to transition from a current swath 302 to a next swath 304. The trajectory of the two-segment turn may include a first segment 310 and a second segment 320. In the first segment 310, the vehicle 390 may start from a beginning position 312 of the turn, move away from the next swath 304, and end at an intermediate position 314. In the second segment 320, the vehicle 390 may start from the intermediate position 314, move toward the next swath 304, and end at the ending position 322 of the turn.

As illustrated in FIG. 3A, the vehicle 390 may be in the forward gear (i.e., the vehicle 390 moves in the direction it is facing) during the first segment 310 (thus, the first segment 310 is represented by a solid line), and switch to the reverse gear (i.e., the vehicle moves in the direction opposite to where it is facing) as it transitions to the second segment 320 (thus, the second segment 320 is represented by a dashed line). This situation may be applicable when the vehicle 390 traverses the current swath 302 in the forward gear before the turn started. After the turn, the vehicle 390 may traverse the next swath 304 in the reverse gear.

As illustrated in FIG. 3B, if the vehicle 390 traverses the current swath 302 in the reverse gear, the vehicle 390 may be in the reverse gear during the first segment 310, and switch to the forward gear as it transitions to the second segment 320. After the turn, the vehicle 390 may traverse the next swath 304 in the forward gear. Therefore, in a two-segment turn, the vehicle 390 may traverse the next swath 304 in a gear that is opposite to that in the current swath 302 (e.g., from forward to reverse, or from reverse to forward).

Compared to the bulb-shaped one-segment turn illustrated in FIGS. 2B and 2C, the two-segment turn illustrated in FIGS. 3A and 3B may allow the entire trajectory of the turn to be confined within the headland 340 even if the headland has a relatively narrow width W. Thus, crop damage may be avoided or minimized. The two-segment turn may also allow a shorter total traveling distance during the turn as compared to a bulb-shaped one-segment turn, and thus may save time and fuel cost. Therefore, the two-segment turn may be more advantageous.

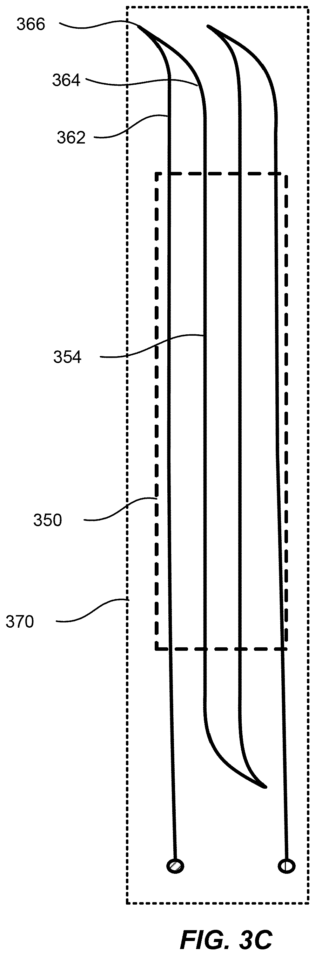

FIG. 3C illustrates an exemplary two-segment turn for a compactor in a construction environment. The short-dashed line 370 indicates a street. The dashed line 350 indicates a work area (e.g., a portion of the street 370 that needs to be compacted). The solid line 354 illustrates the trajectory of the compactor. Once the compactor finishes a swath, it needs to transition to the next swath. In this example, the compactor makes a two-segment turn to transition from a current swath to a next swath. For example, in a first segment 362, the compactor may travel forward to an intermediate position 366, and reverse to the next swath. The compactor may progress swath by swath until the entire work area 350 is completed.

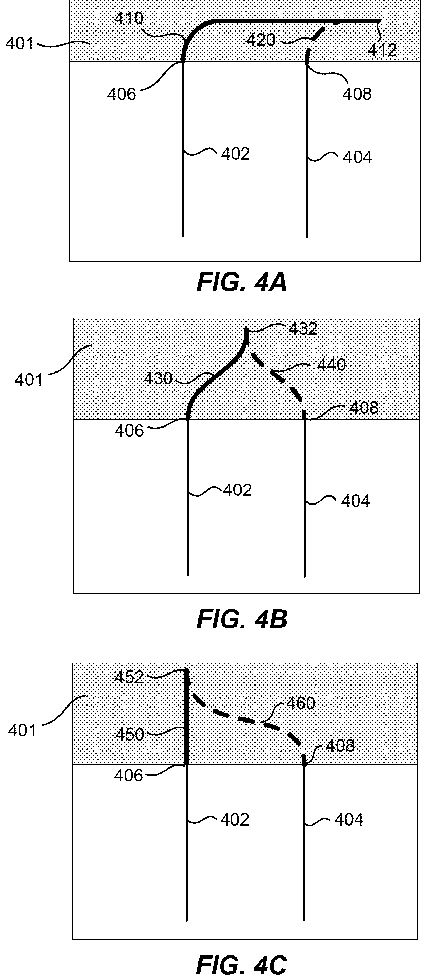

FIG. 4A illustrates an alternative shape of a two-segment turn. Here, in the first segment 410 of the turn, a vehicle may start from the beginning position 406 of the turn, move toward the headland 401 and then toward the next swath 404, and end at an intermediate position 412.

In the second segment 420 of the turn, the vehicle may start from the intermediate position 412 and end at the ending position 408 of the turn.

FIG. 4B illustrates another alternative shape of a two-segment turn. Here, in the first segment 430 of the turn, a vehicle may start from the beginning position 406 of the turn, move toward the headland 401 and slightly toward the next swath 404, and end at an intermediate position 432 that lies laterally about midway between the current swath 402 and the next swath 404. In the second segment 440 of the turn, the vehicle may start from the intermediate position 432 and end at the ending position 408 of the turn. In this case, in order for the entire trajectory of the two-segment turn to be confined within the headland 401 so as to minimize crop damage, it may require a wider headland as compared to the two-segment turn illustrated in FIGS. 3A - 3B and 4A.

FIG. 4C illustrates a further alternative shape of a two-segment turn. Here, in the first segment 450 of the turn, a vehicle may start from the beginning position 406 of the turn, move straight toward the headland 401, and end at an intermediate position 452. In the second segment 460 of the turn, the vehicle may start from the intermediate position 452, and end at the ending position 408 of the turn. In this case, in order for the entire trajectory of the two-segment turn to be confined within the headland 401 so as to minimize crop damage, it may also require a wider headland as compared to the two-segment turn illustrated in FIGS. 3A - 3B and 4A.

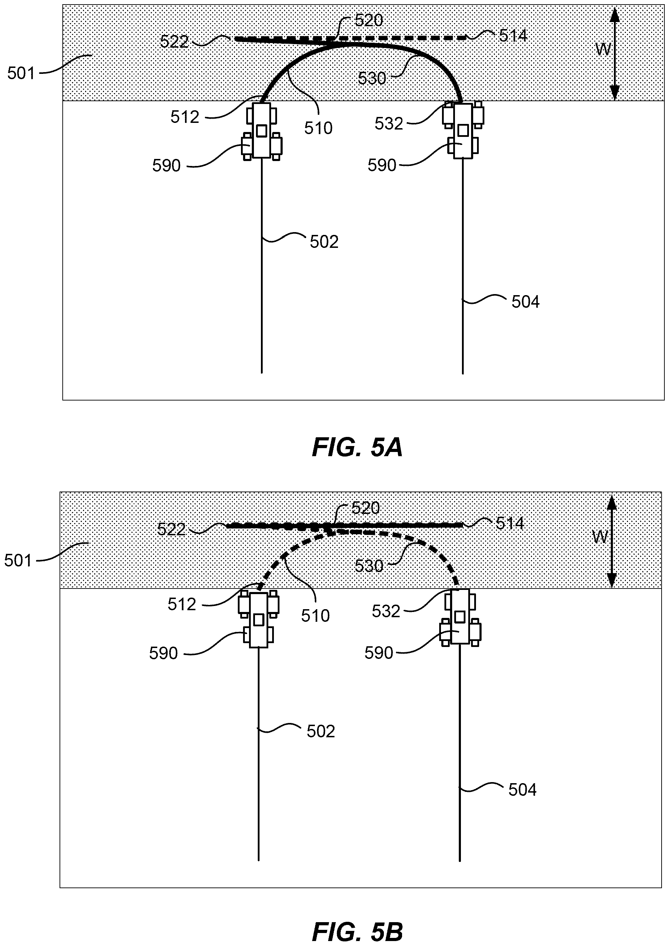

FIG. 5A illustrates an exemplary three-segment turn. A vehicle 590 is making the turn to transition from a current swath 502 to a next swath 504. The trajectory of the three-segment turn may include a first segment 510, a second segment 520, and a third segment 530. In the first segment 510, the vehicle 590 may start from the beginning position 512 of the turn, move toward the next swath 504, and ends at a first intermediate position 514. In the second segment 520, the vehicle 590 may start from the first intermediate position 514, move away from the next swath 504, and ends at a second intermediate position 522. In the third segment 530, the vehicle 590 may start from the second intermediate position 522, move toward the next swath 504, and ends at the ending position 532 of the turn.

As illustrated in FIG. 5A, the vehicle 590 may be in the forward gear during the first segment 510, switch to the reverse gear as it transitions to the second segment 520, and switch to the forward gear again as it transitions to the third segment 530. This situation may be applicable when the vehicle 590 traverses the current swath 502 in the forward gear before the turn started. After the turn, the vehicle 590 may continue to traverse the next swath 504 in the forward gear.

As illustrated in FIG. 5B, if the vehicle 590 traverses the current swath 502 in the reverse gear, the vehicle 590 may be in the reverse gear during the first segment 510, switch to the forward gear as it transitions to the second segment 520, and switch to the reverse gear again as it transitions to the third segment 530. After the turn, the vehicle 590 may continue to traverse the next swath 504 in the reverse gear. Thus, in a three-segment turn, the vehicle 590 may traverse the next swath 504 in a gear that is the same as in the current swath 502. Therefore, if a user wishes to traverse the next swath in the same gear as in the current swath, the user may select a three-segment turn. On the other hand, if the user wishes to traverse the next swath in a gear that is opposite to that in the current swath, the user may select a two-segment turn, as discussed above with reference to FIGS. 3A and 3B.

Similar to the two-segment turn, the three-segment turn illustrated in FIGS. 5A and 5B may also allow the entire trajectory of the turn to be confined within the headland 501 even if the headland 501 has a relatively narrow width W. Thus, crop damage may be avoided or minimized. It should be noted that multi-segment turns with more than three segments are also possible according to some embodiments.

## Headland Following (HF) Turns

A path planner may enable a turn to follow a headland pattern. Such a turn may be referred herein as a headland-following (HF) turn type. In a HF turn, at least part of the trajectory during the turn will follow a guidance line in the headland. In other words, the shape of the trajectory may adaptively change depending on the shape of the guidance line.

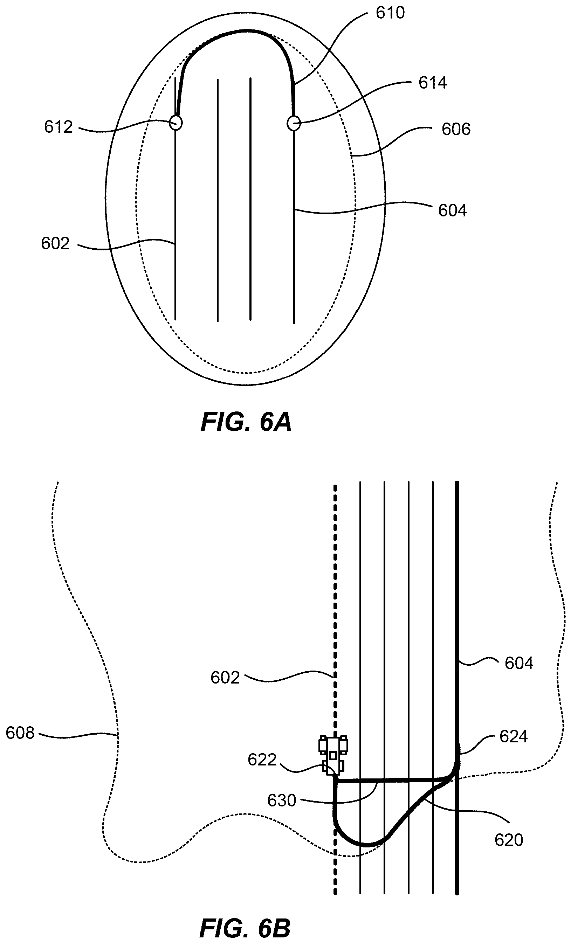

FIG. 6A illustrates a one-segment HF turn. The one-segment turn is for a vehicle to transition from a current swath 602 to a next swath 604 (in this example, the next swath 604 is not immediately adjacent to the current swath 602). The crop area is bounded by a guidance line 606 in the headland (i.e., a headland pattern). In this example, the guidance line 606 has an oval shape. In the trajectory 610 of the one-segment HF turn, a vehicle may start from the beginning position 612 of the turn, move toward the guidance line 606, then follow the guidance line 606 for some distance in the direction toward the next swath 604, and end at the ending position 614 of the turn. As illustrated, the trajectory 610 of the one-segment turn does not need to have a fixed shape (e.g., a bulb-shape or a U-shape); instead, the trajectory is adapted so that at least a portion of the trajectory 610 follows the guidance line 606.

FIG. 6B illustrates another example of a one-segment HF turn. Here, the guidance line 608 has an irregular curved shape. In the trajectory 620 of the one-segment HF turn, a vehicle may start from the beginning position 622 of the turn, move toward the guidance line 608, then follow the guidance line 608 for some distance toward the next swath 604, and end at the ending position 624 of the turn. In this example, the trajectory 620 of the turn is mostly along the guidance line 608. Therefore, crop damage may be minimized. In contrast, in a fixed-pattern U-shape turn, the trajectory 630 of the turn may traverse several swaths, and therefore may result in more crop damage.

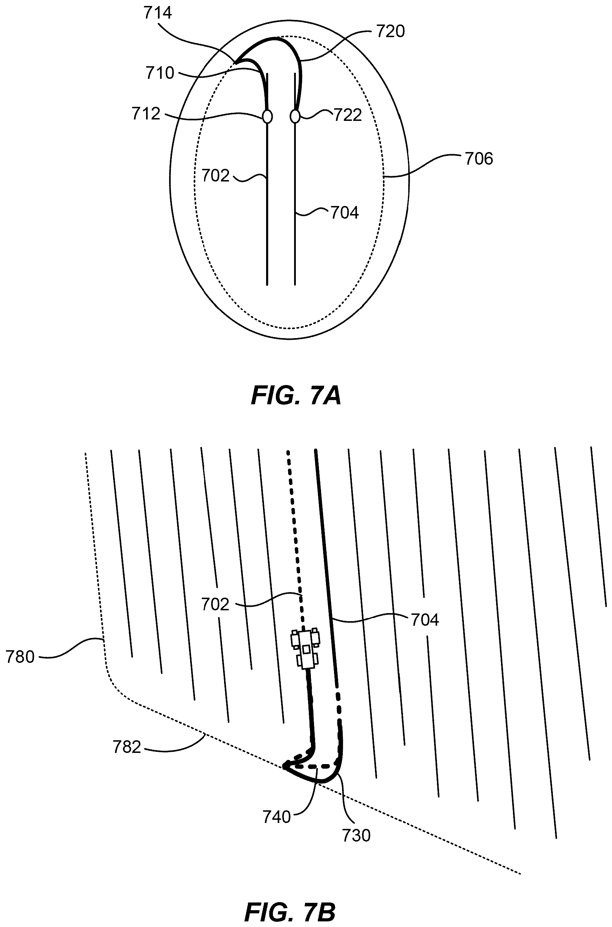

FIG. 7A illustrates a two-segment HF turn. The crop area is bounded by a guidance line 706 in the headland. The trajectory of the two-segment turn includes a first segment 710 and a second segment 720. In the first segment 710, a vehicle may start from the beginning position 712 of the turn at the current swath 702, move toward the guidance line 706, and end at an intermediate position 714 at the guidance line 706. In the second segment 720, the vehicle may start from the intermediate position 714, move along the guidance line 706 for some distance toward the next swath 704, and end at the ending position 722 of the turn. Here, again, the exact geometry of the trajectory is not fixed; instead, it is adapted so that a portion of the trajectory follows the guidance line 706.

FIG. 7B illustrates another example of a two-segment HF turn. In this example, the guidance line 780 includes a section 782 that is at an oblique angle (i.e., neither perpendicular nor parallel) with respect to the direction of the swaths (e.g., the current swath 702 and the next swath 704). In the two-segment HF-turn, a portion of the trajectory 730 follows along the guidance line 780, so that the trajectory 730 is mostly along either a swath or the guidance line 780. Therefore, crop damage may be minimized. In contrast, in a fixed-pattern two-segment turn, the trajectory 740 may go over the crops, and therefore may result in more crop damage.

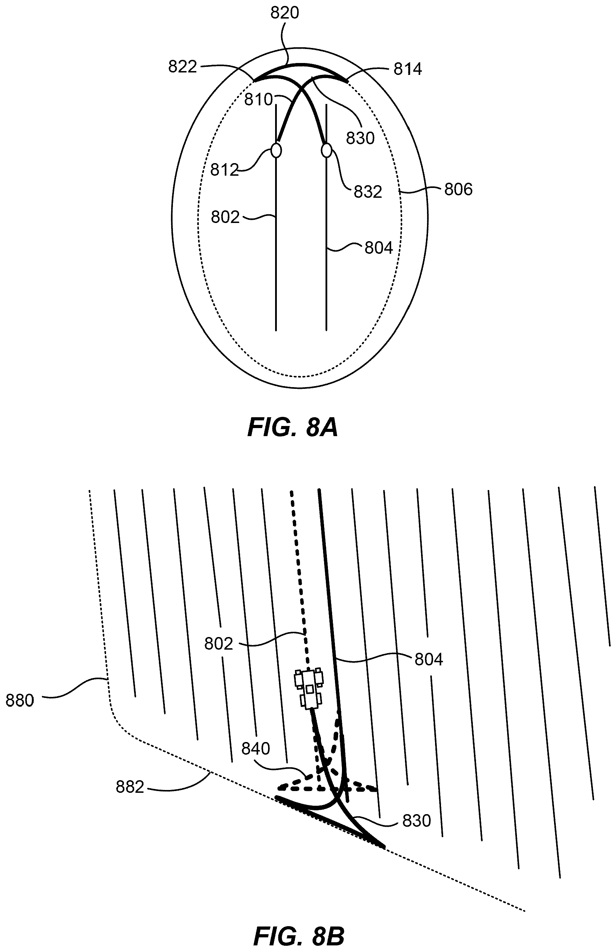

FIG. 8A illustrates a three-segment HF turn. The crop area is bounded by a guidance line 806 in the headland. The trajectory of the three-segment HF turn includes a first segment 810, a second segment 820, and a third segment 830. In the first segment 810, a vehicle may start from the beginning position 812 of the turn at the current swath 802, move toward the guidance line 806 in the direction toward the next swath 804, and ends at a first intermediate position 814 at the guidance line 806. In the second segment 820, the vehicle may start from the first intermediate position 814, move along the guidance line 806 for some distance in the direction away from the next swath 804, and ends at a second intermediate position 822 at the guidance line 806. In the third segment 830, the vehicle may start from the second intermediate position 822, move toward the next swath 804, and ends at the ending position 832 of the turn at the next swath 804. Here, again, the exact geometry of the trajectory is not fixed; instead, it is adapted so that a portion of the trajectory (e.g., the second segment 820) follows the guidance line 806.

FIG. 8B illustrates another example of a three-segment HF turn. In this example, the guidance line 880 includes a section 882 that is at an oblique angle with respect to the direction of the swaths (e.g., the current swath 802 and the next swath 804). In a three-segment HF turn, a portion of the trajectory 830 (e.g., the second segment) follows along the guidance line 880. Therefore, crop damage may be minimized. In contrast, in a fixed-pattern three-segment turn, the trajectory 840 may go over the crops, and therefore may result in more crop damage.

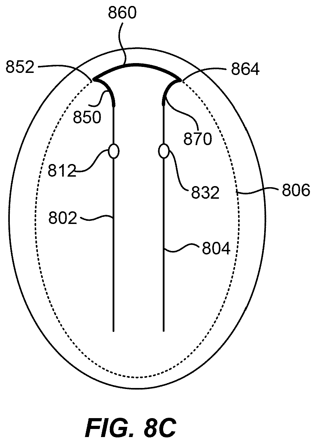

FIG. 8C illustrates another example of a three-segment HF turn. The trajectory of the three-segment HF turn includes a first segment 850, a second segment 860, and a third segment 870. In the first segment 850, a vehicle may start from the beginning position 812 of the turn at the current swath 802, move toward the guidance line 806 in the direction away from the next swath 804, and ends at a first intermediate position 852 at the guidance line 806. In the second segment 860, the vehicle may start from the first intermediate position 852, move along the guidance line 806 for some distance in the direction toward the next swath 804, and ends at a second intermediate position 864 at the guidance line 806. In the third segment 870, the vehicle may start from the second intermediate position 864, move toward the next swath 804, and ends at the ending position 832 of the turn at the next swath 804. Here, again, the exact geometry of the trajectory is not fixed; instead, it is adapted so that a portion of the trajectory (e.g., the second segment 860) follows the guidance line 806.

If an HF turn is chosen, the path planner may generate a trajectory that first takes the vehicle from its current position to the beginning position of the turn, then executes the turn. This feature is referred to as the move-to-start-of-turn (MST).

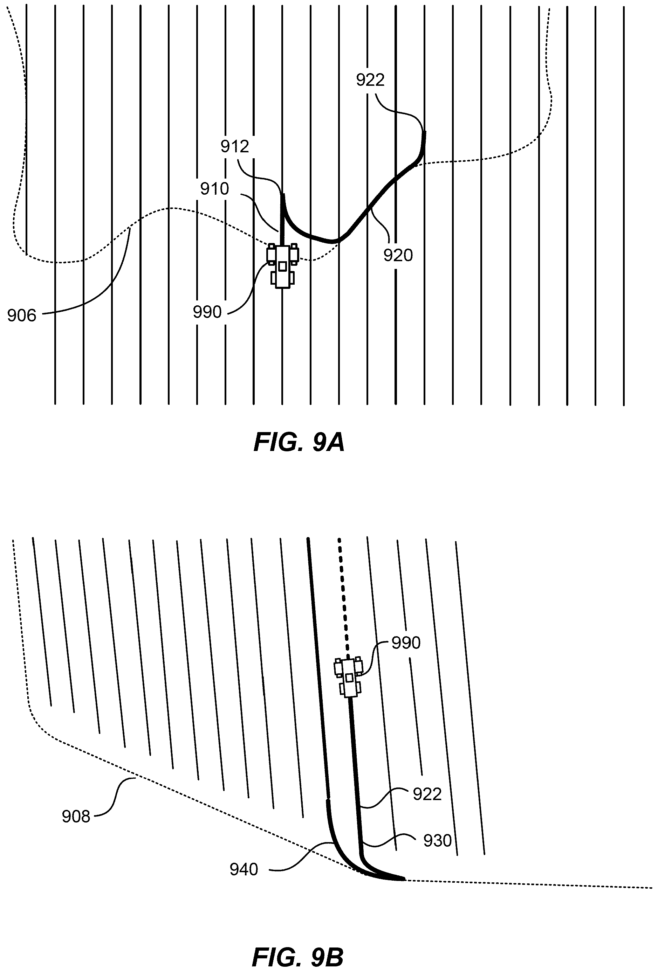

FIG. 9A illustrates an exemplary one-segment HF turn with the MST feature. In this example, the vehicle 990 is in the forward gear before the turn, and its current position is closer to the guidance line 906 than the beginning position 912 of the turn. The trajectory may include a first segment 910, during which the vehicle 990 backs up (in a reverse gear) from its current position to the beginning position 912 of the turn. During a second segment 920 of the trajectory, the vehicle 990 makes the turn in the forward gear from the beginning position 912 to the ending position 922 of the turn. A portion of the second segment 920 follows the guidance line 906. In this example, although it is a one-segment turn type, the trajectory of the vehicle 990 includes two segments due to the MST feature.

FIG. 9B illustrates an exemplary two-segment HF turn with the MST feature. In this example, the vehicle 990 is in the forward gear before the turn, and its current position is farther away from the guidance line 906 than the beginning position 912 of the turn. The trajectory may first take the vehicle 990 from its current position to the beginning position 922 of the turn in the forward gear, then executes a first segment 930 of turn in the forward gear, followed by a second segment 940 of the turn in the reverse gear. In this example, the trajectory includes only two segments; that is, the trajectory from its current position to the beginning position 922 of the turn and the first segment 930 of the turn are considered as one segment, since the vehicle 990 is in the same gear therethrough. On the other hand, if the vehicle's current position is closer to the guidance line 906 than the beginning position 922 of the turn, the trajectory may include three segments.

The MST feature may also be applied to three-segment turns in a similar fashion.

According to the invention, a user may select a move-to-end-of-swath-before-turn (MESBT) option. If the MESBT option is turned on, a path planner produces a trajectory in which the vehicle first moves from its current position to an end position of the current swath, then moves from the end position of the current swath to the beginning position of the turn, then executes the turn. The MESBT feature may be applied to one-segment turns, as well as to multi-segment turns with two or more segments.

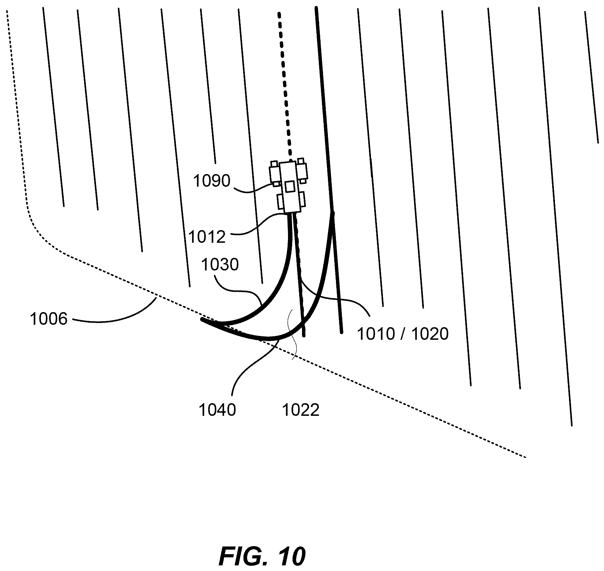

FIG. 10 illustrates an exemplary two-segment turn that follows a headland pattern with the MESBT feature according to the invention. In this example, the vehicle 1090 is in the forward gear facing the end of the swath 1022. The trajectory generated by a path planner may first take the vehicle 1090 from its current position to the end of the swath 1022 in the forward gear, then back to the beginning position 1012 of the turn in the reverse gear, then executes the first segment 1030 of the turn in the forward gear, followed by the second segment 1040 of the turn in the reverse gear. Thus, in this example of a two-segment turn, the trajectory effectively includes four segments. The segment 1010 that takes the vehicle 1090 from its current position to the end of the swath 1022, and the segment 1020 (almost overlaying the segment 1010) that takes the vehicle 1090 from the end of the swath 1022 to the beginning position 1012 of the turn may be referred to as initial segments.

According to some embodiments, a user may select a move-to-beginning-of-next-swath-after-turn (MBSAT) option. If the MBSAT option is turned on, a path planner may produce a trajectory in which, after the turn has been completed, the vehicle moves from the ending position of the turn to the beginning of the next swath. The MBSAT feature may be applied to one-segment turns, as well as multi-segment turns with two or more segments. The MBSAT option may be applied independently, or in combination with the MESBT option.

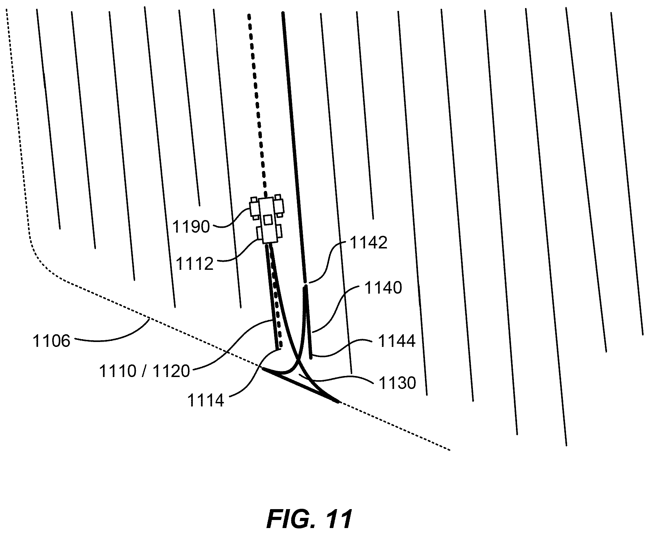

FIG. 11 illustrates an exemplary three-segment HF turn with both the MESBT feature and the MBSAT feature according to the invention. The trajectory may first take the vehicle 1190 from its current position to the end of the swath 1114, then back to the beginning position 1112 of the turn, then executes the three-segment turn 1130 ending at the ending position 1142 of the turn, then to the beginning 1144 of the next swath. The segment 1110 that takes the vehicle 1190 from its current position to the end of the swath 1114, and the segment 1120 (almost overlaying the segment 1110) that takes the vehicle 1190 from the end of the swath 1114 to the beginning position 1112 of the turn may be referred to as initial segments. The segment 1140 that takes the vehicle 1190 from the ending position 1142 of the turn to the beginning of the next swath 1144 may be referred to as the final segment. Thus, in this example, the entire trajectory of the three-segment turn effectively includes six segments: two initial segments, one final segment, plus three segments in the turn.

A user may select a turn-within-boundary (TWB) option for one-segment turns, as well as for multi-segment turns. The TWB option may be available when the headland-following (HF) option is turned off (if the HF option is turned on, the TWB may be automatically on).

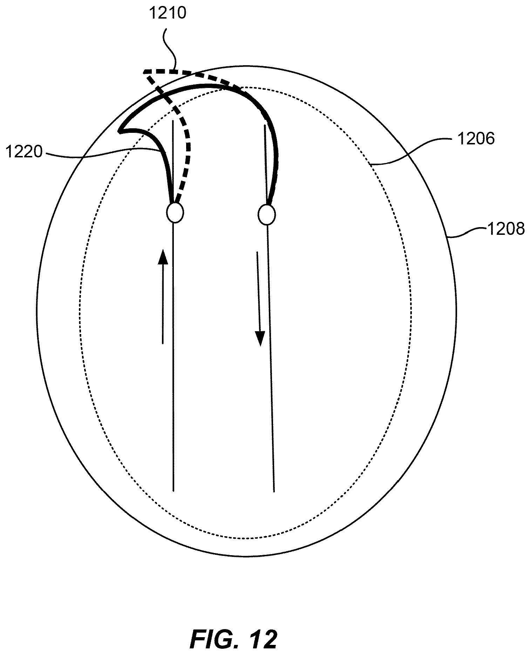

FIG. 12 illustrates exemplary two-segment turns with the TWB option turned on and off, respectively. The work area is bounded by a boundary 1208, which may be a geofence. A guidance line 1206 may be inwardly offset from the boundary 1208. When the TWB option is turned off, a trajectory 1210 of a two-segment turn may go beyond the boundary 1208. When the TWB option is turn on, a trajectory 1220 of a two-segment turn may be confined within the boundary 1208. (Note that, if the HF option is turned on, a trajectory of a two-segment turn may partially follow the guidance line 1206, e.g., as illustrated in FIG. 7A, which effectively confines the trajectory within the boundary 1208.) In some embodiments, a path-planning algorithm may treat the boundary 1208 as an obstacle and perform trajectory optimization with obstacle avoidance, in which the shape of the turn may be changed so as to avoid the obstacles.

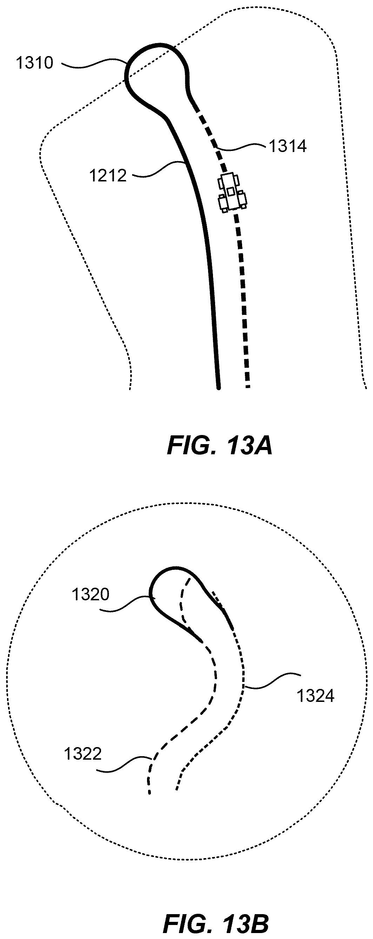

Although the examples illustrated above show straight swaths, the various embodiments discussed above can be applied to curved swaths as well. FIG. 13A illustrates an example of a one-segment turn 1310 from a current swath 1312 to a next swath 1314, both of which are curved.

The turns (including one-segment turns and multi-segment turns) can have arbitrary shapes. FIG. 13B illustrates an example of a one-segment turn 1320 from a current swath 1322 to a next swath 1324. In this example, both the current swath 1322 and the next swath 1324 are curved. As illustrated, the one-segment turn 1320 in this example does not have a fixed bulb shape.

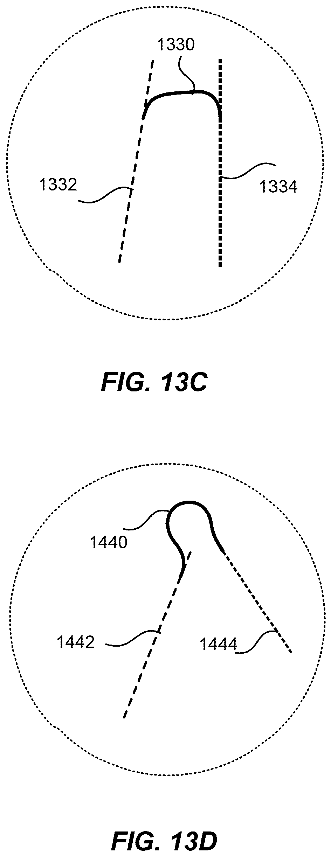

The various examples discussed above can also be applied to swaths that are not parallel to each other. FIG. 13C illustrates an example of a one-segment turn 1330 from a current swath 1332 to a next swath 1334, wherein the current swath 1332 and the next swath 1334 are not parallel to each other. FIG. 13D illustrates another example of a one-segment turn 1340 from a current swath 1342 to a next swath 1344, wherein the current swath 1342 and the next swath 1344 are not parallel to each other. The trajectory of the turn can be an arbitrary shape. For example, it can be a bulb-like shape as illustrated in FIG. 13D, or a U-like shape as illustrated in FIG. 13C, or it can be any other shape. The path-planning algorithms may determine an optimal trajectory that meets certain optimization criteria regardless of the shape of the trajectory.

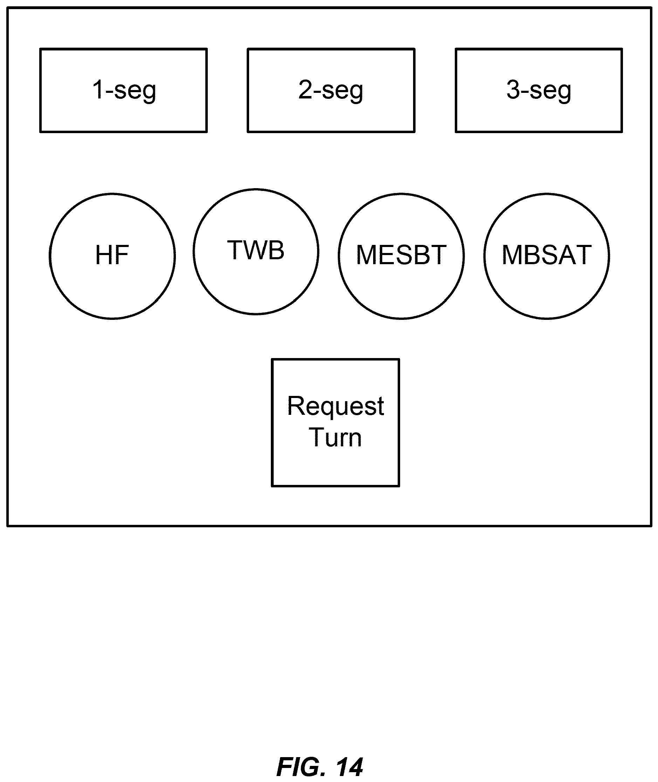

FIG. 14 shows an exemplary user interface (UI) for a user to select a desired type of turn. The user interface may be implemented as selectable options on a display, or as hardware buttons.

The user may select one of the options "1-seg," "2-seg," or "3-seg" to select a one-segment turn, a two-segment turn, or a three-segment turn. Only one of the options can be selected. If no option is selected, the default may be a one-segment turn.

The "HF" (headland-following) option is a toggle button that can be turned on or off.

The "TWB" (turn-within-boundary) option is a toggle button that can be turned on or off if the "HF" option is turned off. If the "HF" option is turned on, "TWB" is automatically turned on.

The "MESBT" (move-to-end-of-swath-before-turn) option is a toggle button that can be turned on or off if "HF" is on. According to some embodiments, if "HF" is turned off, the MESBT option will not be available (i.e., it cannot be turn on).

The "MBSAT" (move-to-beginning-of-next-swath-after-turn) option is a toggle button that can be turned on or off if "HF" is on. According to some embodiments, if "HF" is turned off, the MBSAT option will not be available (i.e., it cannot be turn on).

When the "Request Turn" button is pressed, a command will be sent to the path planner for generating a trajectory for the requested type of turn. According to some embodiments, the generated trajectory may be displayed on a display screen.

In a path planning algorithm for an autonomous vehicle, the inputs may include a start position, a desired goal position, and mechanical constraints of the vehicle. Given these inputs, the algorithm may seek to find an optimal path from the start position to the goal position under certain optimization criteria. Exemplary optimization criteria may include traveling distance, coverage area, fuel efficiency, and the like.

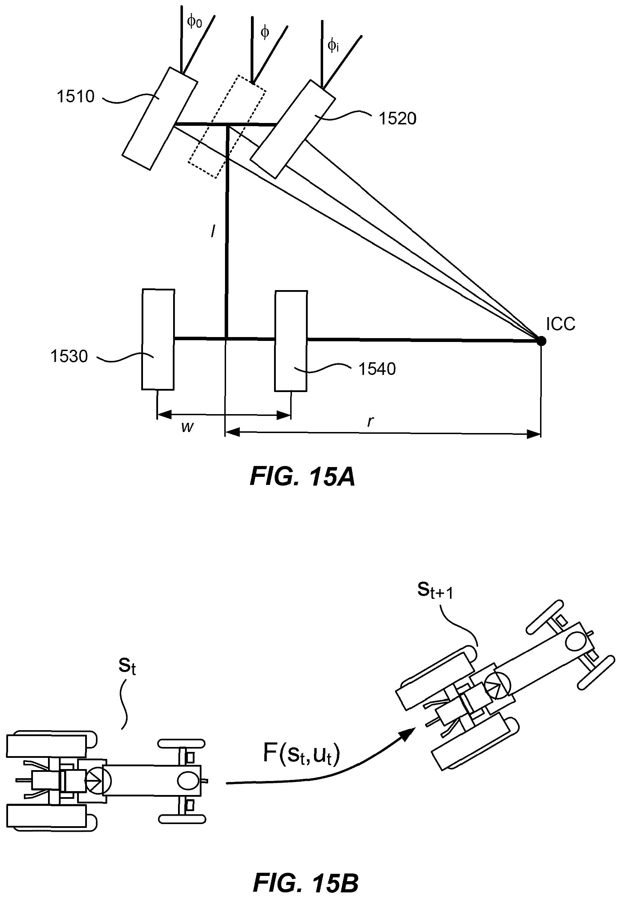

FIGS. 15A and 15B illustrate schematically a vehicle model. The vehicle includes front wheels 1510 and 1520, and rear wheels 1530 and 1540. The rear wheels 1530 and 1540 are separated from each other by a width w. The front wheels and the rear wheels are separated by a distance $l$. In an active front steering integrated chassis control system, the effective steering angle $\phi$ may be between the steering angles of the left and right front wheels $\phi_o$ and $\phi_i$. Vehicle mechanical constraints may include the velocity of the vehicle, the slew rate of the vehicle (i.e., the rate of change of steering angle), maximum steering angle, the length of the vehicle, and the like, as well as the footprint and the mechanical constraints of an attached implement. The dynamic motion of the vehicle may be expressed as,

$$s_{t+1} = F(s_t, u_t),$$

where $s_t$ is the current pose at time $t$, which may include the (x, y, yaw, curvature, and the like) coordinates; $s_{t+1}$ is the future pose at $t+1$; and $u_t$ is the action, which may include speed, steering, and the like. Curvature of a vehicle is a path planning entity that relates to the steering angle and wheelbase of the vehicle. For example, if the steering angle is high, then curvature is high, and if the steering angle is low then the curvature is low. In some embodiments, the curvature may be defined as the tangent of the steering angle divided by the wheelbase.

According to some embodiments, search-based methods may be used for path planning. Search techniques may include blind search techniques (e.g., depth first search (DFS), breadth first search (BFS), and the like), and heuristic search techniques (e.g., hill climbing search, best-first search, greedy search, A* search, and the like).

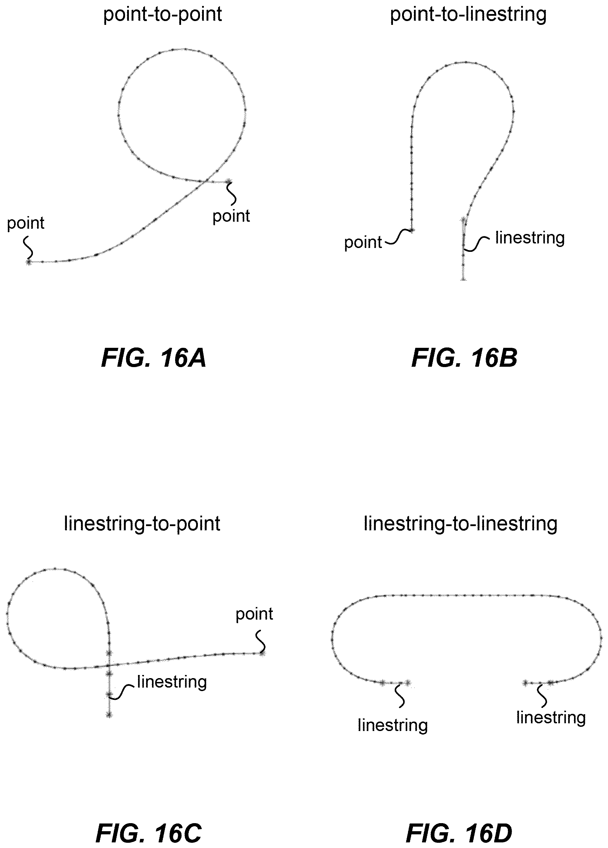

Path planning for turns from one swath to a next swath may optimize distance from a start pose of the vehicle (or its implement) to a desired goal pose of the vehicle. Such path planning may involve four types of trajectory optimization: point-to-point, point-to-linestring, linestring-to-point, and linestring-to-linestring, as illustrated in FIGS. 16A - 16D. A point may comprise a pose. A linestring may comprise a sequence of points. For example, point-to-point trajectory optimization might be used for a turn in which the aim is to find the shortest feasible single segment from one point on start swath to another point on the goal swath (for example an adjacent point on the next swath). Linestring-to-linestring trajectory optimization might be used for an end of-row-turn in which the aim is to find the shortest feasible single segment turn that is within the boundary and can go as close as possible to the end of current swath and as close as possible to the beginning of next swath. As another example, point-to-linestring or a linestring-to-point trajectory optimization may be used in a two-segment turn. There, the aim may be to go from the vehicle's current position (which is a point) to the portion of the headland in front of the vehicle (which is a linestring); then the vehicle reverses from its current position on the headland (which is a point) to the next swath (which is a linestring).

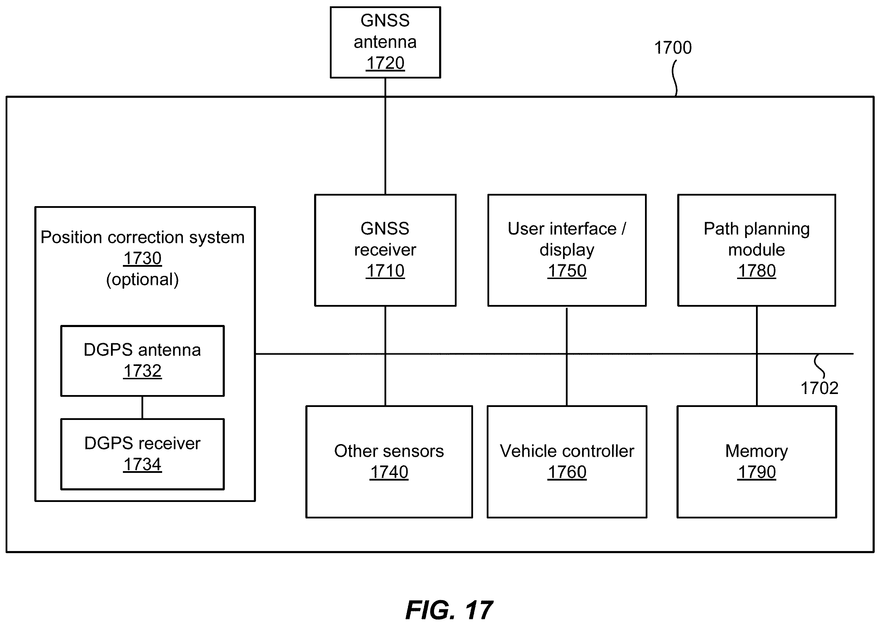

FIG. 17 shows a simplified diagram of a system 1700 for an autonomous vehicle according to some embodiments. The system 1700 may include a path planning module 1780, and a user interface 1750. The user interface 1750 may allow a user to request and accept a turn, and to specify a type of turn, as discussed above. In some embodiments, the user interface 1750 may also include a display.

The path planning module 1780 may include one or more computer processors configured to determine a trajectory for the requested turn according to the various embodiments as discussed above. In some embodiments, the trajectory may be displayed in a display (e.g., the display in the user interface 1750). The path planning module 1780 may also be configured to perform other navigation planning and/or coverage planning (e.g., planning the trajectories of the swaths) for the autonomous vehicle.

The system 1700 may include a memory 1790.

The memory 1790 may store information needed for the path planning module 1780, as well as other information. For example, the memory 1790 may store information about a work area, such as a boundary (e.g., a geofence) and headland patterns (i.e., guidance lines). The memory 1790 may also store information of the swaths (which may be predetermined or generated by the path planning module 1780). The memory 1790 may also store computer-executable instructions to be executed by the computer processors of the path planning module 1780. The memory 1790 may comprise a volatile memory random access memory (RAM), or non-volatile data storage device such as a hard disk drive, flash memory or other optical or magnetic storage device. In some embodiments, the path planning module 1780 may include its own memory.

The system 1700 may include a global navigation satellite systems (GNSS) antenna 1720 attached to the autonomous vehicle, and a GNSS receiver 1710 coupled to the GNSS antenna 1720. The GNSS receiver 1710 may be configured to determine a current position of the vehicle based on the satellite signals received from GNSS satellites. In some embodiments, the system 1700 may also include an optional position correction system 1730. The position correction system 1730 may include an antenna 1732 and a receiver 1734 for receiving correction data from a reference station or a network of reference stations. For example, the position correction system 1730 may include a differential global positioning system (DGPS). The correction data may be used by the GNSS receiver 1710 to determine a more precise position of the vehicle (e.g., to millimeter or sub-millimeter accuracies). In some embodiments, the GNSS receiver 1710 may be an independent unit separate from the system 1700.

The system 1700 may include other sensors 1740. For example, the other sensors 1740 may include LiDAR sensors for obstacle detection, inertial measurement units or IMUs (e.g., accelerometers and gyroscopes), wheel angle sensors, and the like.

The system 1760 may include a vehicle controller 1760. The vehicle controller 1760 may be configured to operate the vehicle based on the sensor data (e.g., including GNSS data and other sensor data) and the trajectories determined by the path planning module 1780. For example, the path planning module 1780 may output a trajectory for a turn, along with a speed profile and optionally an implement profile for the trajectory, to the vehicle controller 1760, so that the vehicle controller 1760 may execute the turn according to the trajectory. The speed profile includes a respective speed for each respective point of the plurality of points.

In some embodiments, the various components of the system 1700 may be interconnected with each other via a bus 1702. In some other embodiments, the various components may be connected with each other in other ways.

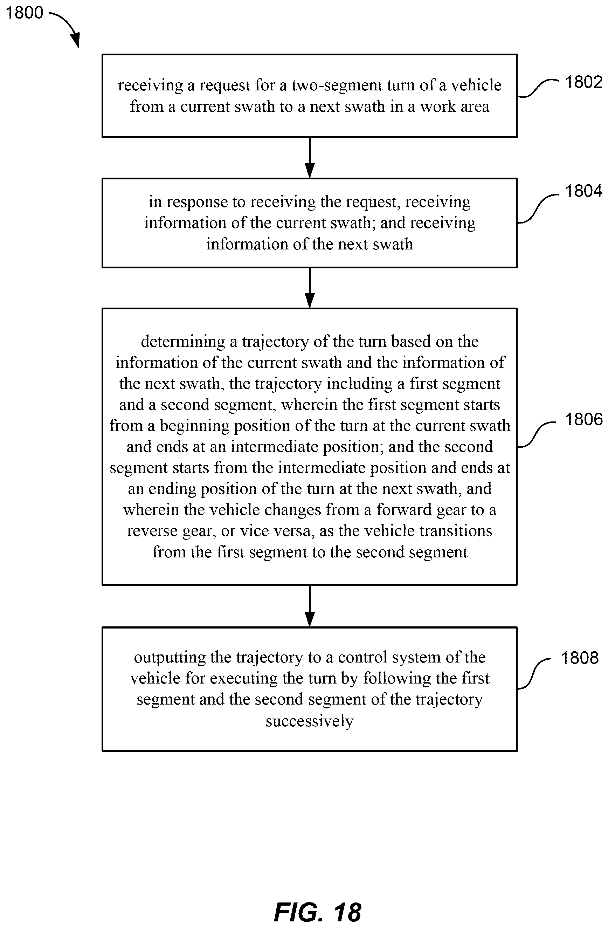

FIG. 18 is a simplified flowchart illustrating a method 1800 of path planning for an autonomous vehicle to make a turn.

The method 1800 includes, at 1802, receiving a request for a two-segment turn of a vehicle from a current swath to a next swath in a work area, and at 1804, in response to receiving the request, receiving information of the current swath and information of the next swath.

The method 1800 further includes, at 1806, determining a trajectory of the turn based on the information of the current swath and the information of the next swath. The trajectory includes a first segment and a second segment. The first segment starts from a beginning position of the turn at the current swath and ends at an intermediate position; and the second segment starts from the intermediate position and ends at an ending position of the turn at the next swath. The vehicle changes from a forward gear to a reverse gear, or vice versa, as the vehicle transitions from the first segment to the second segment.

The method 1800 further includes outputting the trajectory to a control system of the vehicle for executing the turn by following the first segment and the second segment of the trajectory successively.

It should be appreciated that the specific steps illustrated in FIG. 18 provide a particular method of path planning for an autonomous vehicle to make a turn. Other sequences of steps may also be performed according to alternative embodiments. For example, alternative embodiments of the present invention may perform the steps outlined above in a different order. Moreover, the individual steps illustrated in FIG. 18 may include multiple sub-steps that may be performed in various sequences as appropriate to the individual step. Furthermore, additional steps may be added or removed depending on the particular applications. One of ordinary skill in the art would recognize many variations, modifications, and alternatives.

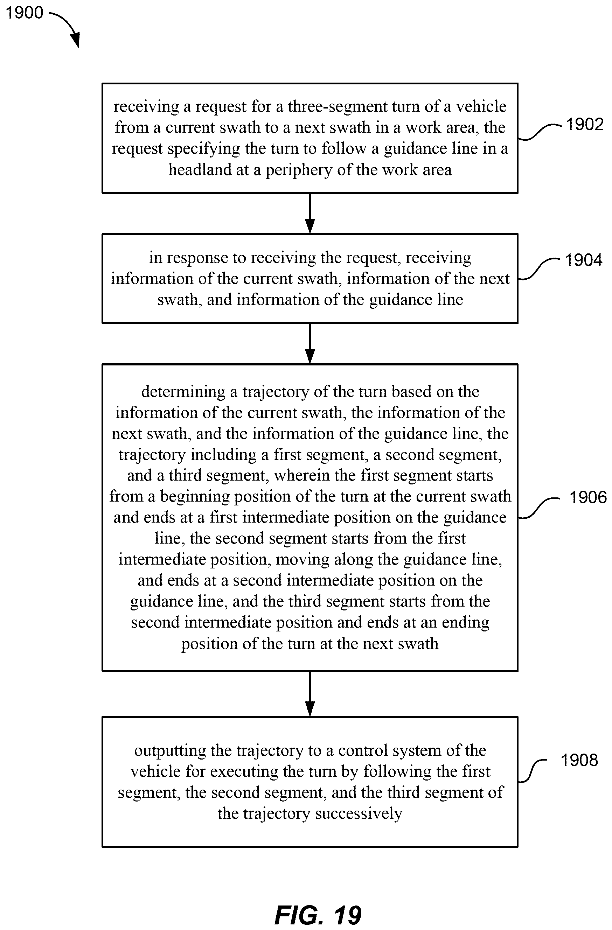

FIG. 19 is a simplified flowchart illustrating a method 1900 of path planning for an autonomous vehicle to make a turn.

The method 1900 includes, at 1902, receiving a request for a three-segment turn of a vehicle from a current swath to a next swath in a work area. The request specifies that the turn is to follow a guidance line in a headland at a periphery of the work area. The method 1900 further includes, at 1904, in response to receiving the request, receiving information of the current swath, information of the next swath, and information of the guidance line.

The method 1900 further includes, at 1906, determining a trajectory of the turn based on the information of the current swath, the information of the next swath, and the information of the guidance line. The trajectory includes a first segment, a second segment, and a third segment. The first segment starts from a beginning position of the turn at the current swath and ends at a first intermediate position on the guidance line. The second segment starts from the first intermediate position, moving along the guidance line, and ends at a second intermediate position on the guidance line. The vehicle changes from a forward gear to a reverse gear, or vice versa, as the vehicle transitions from the first segment to the second segment. The third segment starts from the second intermediate position and ends at an ending position of the turn at the next swath. The vehicle changes from the reverse gear to the forward gear, or vice versa, as the vehicle transitions from the second segment to the third segment.

The method 1900 further includes, at 1908, outputting the trajectory to a control system of the vehicle for executing the turn by following the first segment, the second segment, and the third segment of the trajectory successively.

It should be appreciated that the specific steps illustrated in FIG. 19 provide a particular method of path planning for an autonomous vehicle to make a turn. Other sequences of steps may also be performed according to alternative embodiments. For example, alternative embodiments of the present invention may perform the steps outlined above in a different order. Moreover, the individual steps illustrated in FIG. 19 may include multiple sub-steps that may be performed in various sequences as appropriate to the individual step. Furthermore, additional steps may be added or removed depending on the particular applications. One of ordinary skill in the art would recognize many variations, modifications, and alternatives.

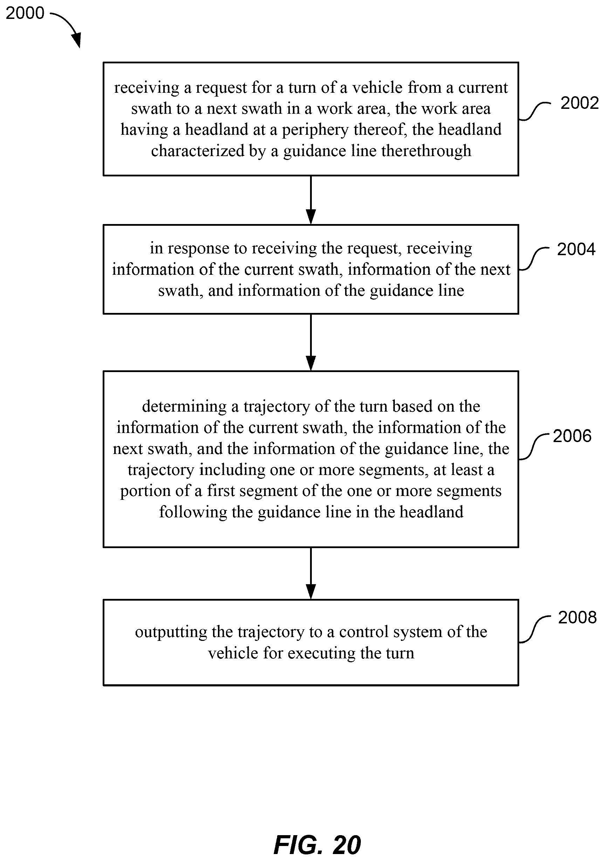

FIG. 20 is a simplified flowchart illustrating a method 2000 of path planning for an autonomous vehicle to make a turn.

The method 2000 includes, at 2002, receiving a request for a turn of a vehicle from a current swath to a next swath in a work area. The work area has a headland at a periphery thereof. The headland characterized by a guidance line therethrough. The method 2000 further includes, at 2004, in response to receiving the request, receiving information of the current swath, information of the next swath, and information of the guidance line.

The method 2000 further includes, at 2006, determining a trajectory of the turn based on the information of the current swath, the information of the next swath, and the information of the guidance line. The trajectory includes one or more segments. At least a portion of a first segment of the one or more segments follows the guidance line in the headland. The method 2000 further includes, at 2008, outputting the trajectory to a control system of the vehicle for executing the turn.

It should be appreciated that the specific steps illustrated in FIG. 20 provide a particular method of path planning for an autonomous vehicle to make a turn. Other sequences of steps may also be performed according to alternative embodiments. For example, alternative embodiments of the present invention may perform the steps outlined above in a different order. Moreover, the individual steps illustrated in FIG. 20 may include multiple sub-steps that may be performed in various sequences as appropriate to the individual step. Furthermore, additional steps may be added or removed depending on the particular applications. One of ordinary skill in the art would recognize many variations, modifications, and alternatives.

It is also understood that the examples and embodiments described herein are for illustrative purposes only and that various modifications or changes in light thereof will be suggested to persons skilled in the art and are to be included within the scope of the appended claims.

**Claims**

1. A method of path planning for an autonomous vehicle, the method comprising:

receiving a request for a two-segment turn of a vehicle (1090) from a current swath to a next swath in a work area following a guidance line in a headland at a periphery of the work area;
in response to receiving the request, receiving information of the current swath including an end position of the current swath, information of the next swath, information of the guidance line, and a current position of the vehicle;
determining a trajectory of the turn based on the information of the current swath, the information of the next swath, the information of the guidance line and the current position of the vehicle, the trajectory including a first segment (1030), a second segment (1040), and at least two initial segments (1010, 1020) wherein:

a first initial segment (1010) of the at least two initial segments starts at the current position and ends at the end position of the current swath and a second initial segment (1020) of the at least two initial segments starts at the end position of the current swath and ends at the beginning position (1012) of the turn;
the first segment (1030) starts from a beginning position (1012) of the turn at the current swath and ends at an intermediate position;
the second segment (1040) starts from the intermediate position and ends at an ending position of the turn at the next swath, wherein at least a portion of the second segment of the trajectory follows the guidance line; and
wherein the vehicle changes from a forward gear to a reverse gear, or vice versa, as the vehicle transitions from each segment to the next segment; and

outputting the trajectory to a control system of the vehicle for executing the turn by following the first initial segment (1010), the second initial segment (1020), the first segment (1030) and the second segment (1040) of the trajectory successively.

2. The method of claim 1, wherein the request specifies the turn to be within a boundary, the method further comprising:

receiving information of the boundary;
wherein determining the trajectory of the turn is performed further based on the information of the boundary, and wherein the trajectory of the turn is confined within the boundary.

3. The method of claim 1, wherein the request specifies moving to a beginning position of the next swath after the turn, and wherein determining the trajectory of the turn is performed further based on the beginning position of the next swath, and the trajectory further includes:
a final segment that starts from the ending position of the turn and ends at the beginning position of the next swath, wherein the final segment is to be executed after the first segment and the second segment are executed.

4. The method of claim 1, wherein determining the trajectory of the turn is performed such that a total distance traversed by the vehicle along the first segment and the second segment is minimized.

5. The method of claim 1, wherein:

in response to determining that the vehicle is traversing the current swath in the forward gear before the turn, determining gear settings of the vehicle during the turn such that the vehicle traverses the first segment in the forward gear, and traverses the second segment in the reverse gear; and
in response to determining that the vehicle is traversing the current swath in the reverse gear before the turn, determining the gear settings of the vehicle during the turn such that the vehicle traverses the first segment in the reverse gear, and traverses the second segment in the forward gear.

6. The method of claim 1, wherein the trajectory includes a plurality of points, each respective point of the plurality of points **characterized by** a respective two-dimensional spatial coordinate, a respective yaw angle, and a respective curvature of the vehicle, and the method further comprising:

determining a speed profile along the trajectory, the speed profile including a respective speed for each respective point of the plurality of points; and

outputting the speed profile to the control system of the vehicle.

7. The method of claim 1, wherein the vehicle has an implement attached thereto, and the method further comprising:

determining an implement profile along the trajectory; and

outputting the implement profile to the control system of the vehicle.

8. A method of path planning for an autonomous vehicle, the method comprising:

receiving a request for a three-segment turn of a vehicle (1190) from a current swath to a next swath in a work area, the request specifying the turn to follow a guidance line in a headland at a periphery of the work area;

in response to receiving the request, receiving information of the current swath including an end position of the current swath (1114), information of the next swath, information of the guidance line, and a current position of the vehicle;

determining a trajectory of the turn based on the information of the current swath, the information of the next swath, the information of the guidance line and the current position of the vehicle, the trajectory including a first segment, a second segment, a third segment and at least two initial segments, wherein:

a first initial segment (1110) of the at least two initial segments starts at the current position and ends at the end position of the current swath (1114) and a second initial segment (1120) of the at least two initial segments starts at the end position of the current swath (1114) and ends at the beginning position (1112) of the turn;

the first segment starts from a beginning position (1112) of the turn at the current swath and ends at a first intermediate position on the guidance line;

the second segment starts from the first intermediate position, moving along the guidance line, and ends at a second intermediate position on the guidance line;

the third segment starts from the second intermediate position and ends at an ending position (1142) of the turn at the next swath; and

wherein the vehicle changes from the reverse gear to the forward gear, or vice versa, as the vehicle transitions from each segment to the next segment; and

outputting the trajectory to a control system of the vehicle for executing the turn by following the first initial segment (1110), the second initial segment (1120), the first segment, the second segment, and the third segment of the trajectory successively.

9. The method of claim 8, wherein the request specifies moving to a beginning position of the next swath after the turn, and wherein determining the trajectory of the turn is performed further based on the beginning position of the next swath, and the trajectory further includes: a final segment that starts from the ending position of the turn and ends at the beginning position of the next swath, wherein the final segment is to be executed after the first segment, the second segment, and the third segment are executed.

10. The method of claim 8, wherein:

in the first segment of the trajectory, the vehicle moves from the beginning position of the turn toward the guidance line and in a direction toward the next swath;

in the second segment of the trajectory, the vehicle moves from the first intermediate position along the guidance line in a direction toward the current swath to the second intermediate position; and

in the third segment of the trajectory, the vehicle moves from the second intermediate position toward the next swath.

11. The method of claim 8, wherein:

in the first segment of the trajectory, the vehicle moves from the beginning position of the turn toward the guidance line and in a direction away from the next swath;

in the second segment of the trajectory, the vehicle moves from the first intermediate position along the guidance line toward the next swath to the second intermediate position; and

in the third segment of the trajectory, the vehicle moves from the second intermediate position toward the next swath.

12. The method of claim 8, wherein determining the trajectory of the turn is performed such that a total distance traversed by the vehicle along the first segment, the second segment, and the third segment is minimized.

**Patentansprüche**

1. Verfahren zur Wegeplanung für ein autonomes Fahrzeug, wobei das Verfahren aufweist:

ein Empfangen einer Anfrage für eine Zwei-Segment-Wende eines Fahrzeugs (1090) von einem aktuellen Schwad zu einem nächsten Schwad in einem Arbeitsbereich unter Folgen einer Führungslinie in einem Vorgewende an einer Peripherie des Arbeitsbereichs;
als Antwort auf das Empfangen der Anfrage, ein Empfangen einer Information über den aktuellen Schwad einschließlich einer Endposition des aktuellen Schwads, einer Information über den nächsten Schwad, einer Information über die Führungslinie und einer aktuellen Position des Fahrzeugs;
ein Bestimmen einer Trajektorie der Wende basierend auf der Information über den aktuellen Schwad, der Information über den nächsten Schwad, der Information über die Führungslinie und der aktuellen Position des Fahrzeugs, wobei die Trajektorie ein erstes Segment (1030), ein zweites Segment (1040) und mindestens zwei initiale Segmente (1010, 1020) umfasst, wobei:

ein erstes initiales Segment (1010) der mindestens zwei initialen Segmente an der aktuellen Position startet und an der Endposition des aktuellen Schwads endet und ein zweites initiales Segment (1020) der mindestens zwei initialen Segmente an der Endposition des aktuellen Schwads startet und an der Anfangsposition (1012) der Wende endet;
wobei das erste Segment (1030) von einer Anfangsposition (1012) der Wende an dem aktuellen Schwad startet und an einer Zwischenposition endet;
wobei das zweite Segment (1040) von der Zwischenposition startet und an der Endposition der Wende an dem nächsten Schwad endet, wobei mindestens ein Abschnitt des zweiten Segments der Trajektorie der Führungslinie folgt; und
wobei das Fahrzeug von einem Vorwärtsgang zu einem Rückwärtsgang wechselt, oder umgekehrt, wenn das Fahrzeug von jedem Segment zu dem nächsten Segment übergeht; und
ein Ausgeben der Trajektorie an ein Steuersystem des Fahrzeugs zum Ausführen der Wende durch nacheinander dem ersten initialen Segment (1010), dem zweiten initialen Segment (1020), dem ersten Segment (1030) und dem zweiten Segment (1040) der Trajektorie Folgen.

2. Verfahren nach Anspruch 1, wobei die Anfrage die Wende als innerhalb einer Grenze liegend spezifiziert, wobei das Verfahren weiterhin aufweist:
ein Empfangen einer Information über die Grenze; wobei das Bestimmen der Trajektorie der Wende weiterhin basierend auf der Information über die Grenze ausgeführt wird und wobei die Trajektorie der Wende innerhalb der Grenze eingeschlossen wird.

3. Verfahren nach Anspruch 1, wobei die Anfrage ein Bewegen zu einer Anfangsposition des nächsten Schwads nach der Wende spezifiziert und wobei das Bestimmen der Trajektorie der Wende weiterhin basierend auf der Anfangsposition des nächsten Schwads ausgeführt wird und wobei die Trajektorie weiterhin umfasst:
ein finales Segment, das von der Endposition der Wende startet und an der Anfangsposition des nächsten Schwads endet, wobei das finale Segment auszuführen ist, nachdem das erste Segment und das zweite Segment ausgeführt wurden.

4. Verfahren nach Anspruch 1, wobei das Bestimmen der Trajektorie der Wende derart ausgeführt wird, dass eine Gesamtdistanz, die von dem Fahrzeug entlang des ersten Segments und des zweiten Segments gefahren wird, minimiert wird.

5. Verfahren nach Anspruch 1, wobei

als Antwort auf das Bestimmen, dass das Fahrzeug vor der Wende den aktuellen Schwad in dem Vorwärtsgang entlangfährt, ein Bestimmen von Gangeinstellungen des Fahrzeugs während der Wende derart, dass das Fahrzeug das erste Segment in dem Vorwärtsgang entlangfährt und das zweite Segment in dem Rückwärtsgang entlangfährt; und
als Antwort auf das Bestimmen, dass das Fahrzeug vor der Wende den aktuellen Schwad in dem Rückwärtsgang entlangfährt, ein Bestimmen der Gangeinstellungen des Fahrzeugs während der Wende derart, dass das Fahrzeug das erste Segment in dem Rückwärtsgang entlangfährt und das zweite Segment in dem Vorwärtsgang entlangfährt.

6. Verfahren nach Anspruch 1, wobei die Trajektorie eine Mehrzahl von Punkten umfasst, wobei jeder Punkt der Mehrzahl von Punkten durch eine jeweilige zweidimensionale räumliche Koordinate, einen jeweiligen Gierwinkel und eine jeweilige Krümmung des Fahrzeugs charakterisiert ist, und wobei das Verfahren weiterhin aufweist:

ein Bestimmen eines Geschwindigkeitsprofils entlang der Trajektorie, wobei das Geschwindigkeitsprofil eine jeweilige Geschwindigkeit für jeden Punkt der Mehrzahl von Punkten umfasst; und

ein Ausgeben des Geschwindigkeitsprofils an das Steuersystem des Fahrzeugs.

7. Verfahren nach Anspruch 1, wobei das Fahrzeug ein daran angebrachtes Gerät aufweist, und wobei das Verfahren weiterhin aufweist:

ein Bestimmen eines Geräteprofils entlang der Trajektorie; und
ein Ausgeben des Geräteprofils an das Steuersystem des Fahrzeugs.

8. Verfahren zur Wegeplanung für ein autonomes Fahrzeug, wobei das Verfahren aufweist:

ein Empfangen einer Anfrage für eine Drei-Segment-Wende eines Fahrzeugs (1190) von einem aktuellen Schwad zu einem nächsten Schwad in einem Arbeitsbereich, wobei die Anfrage spezifiziert, dass die Wende einer Führungslinie in einem Vorgewende an einer Peripherie des Arbeitsbereichs folgt;
als Antwort auf das Empfangen der Anfrage, ein Empfangen einer Information über den aktuellen Schwad einschließlich einer Endposition des aktuellen Schwads (1114), einer Information über den nächsten Schwad, einer Information über die Führungslinie und einer aktuellen Position des Fahrzeugs;
ein Bestimmen einer Trajektorie der Wende basierend auf der Information über den aktuellen Schwad, der Information über den nächsten Schwad, der Information über die Führungslinie und der aktuellen Position des Fahrzeugs, wobei die Trajektorie ein erstes Segment, ein zweites Segment, ein drittes Segment und mindestens zwei initiale Segmente umfasst, wobei:

ein erstes initiales Segment (1110) der mindestens zwei initialen Segmente an der aktuellen Position startet und an der Endposition des aktuellen Schwads (1114) endet und ein zweites initiales Segment (1120) der mindestens zwei initialen Segmente an der Endposition des aktuellen Schwads (1114) startet und an der Anfangsposition (1112) der Wende endet;
wobei das erste Segment von einer Anfangsposition (1112) der Wende an dem aktuellen Schwad startet und an einer ersten Zwischenposition auf der Führungslinie endet;
wobei das zweite Segment von der ersten Zwischenposition startet, entlang der Führungslinie läuft und an einer zweiten Zwischenposition auf der Führungslinie endet;
wobei das dritte Segment von der zweiten Zwischenposition startet und an einer Endposition (1142) der Wende an dem nächsten Schwad endet; und
wobei das Fahrzeug von dem Rückwärtsgang zu dem Vorwärtsgang wechselt, oder umgekehrt, wenn das Fahrzeug von jedem Segment zu dem nächsten Segment übergeht; und

ein Ausgeben der Trajektorie an ein Steuersystem des Fahrzeugs zum Ausführen der Wende durch nacheinander dem ersten initialen Segment (1110), dem zweiten initialen Segment (1120), dem ersten Segment, dem zweiten Segment und dem dritten Segment der Trajektorie Folgen.

9. Verfahren nach Anspruch 8,
wobei die Anfrage ein Bewegen zu einer Anfangsposition des nächsten Schwads nach der Wende spezifiziert und wobei das Bestimmen der Trajektorie der Wende weiterhin basierend auf der Anfangsposition des nächsten Schwads ausgeführt wird und wobei die Trajektorie weiterhin umfasst:
ein finales Segment, das von der Endposition der Wende startet und an der Anfangsposition des nächsten Schwads endet, wobei das finale Segment auszuführen ist, nachdem das erste Segment, das zweite Segment und das dritte Segment ausgeführt wurden.

10. Verfahren nach Anspruch 8, wobei:

das Fahrzeug in dem ersten Segment der Trajektorie von der Anfangsposition der Wende zu der Führungslinie und in eine Richtung zu dem nächsten Schwad fährt;
das Fahrzeug in dem zweiten Segment der Trajektorie von der ersten Zwischenposition entlang der Führungslinie in eine Richtung zu dem aktuellen Schwad zu der zweiten Zwischenposition fährt; und
das Fahrzeug in dem dritten Segment der Trajektorie von der zweiten Zwischenposition zu dem nächsten Schwad fährt.

11. Verfahren nach Anspruch 8, wobei:

das Fahrzeug in dem ersten Segment der Trajektorie von der Anfangsposition der Wende zu der Führungslinie und in eine Richtung weg von dem nächsten Schwad fährt;
das Fahrzeug in dem zweiten Segment der Trajektorie von der ersten Zwischenposition entlang der Führungslinie zu dem nächsten Schwad zu der zweiten Zwischenposition fährt; und

das Fahrzeug in dem dritten Segment der Trajektorie von der zweiten Zwischenposition zu dem nächsten Schwad fährt.

12. Verfahren nach Anspruch 8, wobei das Bestimmen der Trajektorie der Wende so ausgeführt wird, dass eine Gesamtdistanz, die von dem Fahrzeug entlang des ersten Segments, des zweiten Segments und des dritten Segments gefahren wird, minimiert wird.

**Revendications**

1. Procédé de planification de trajet destiné à un véhicule autonome, le procédé comprenant :

la réception d'une demande de demi-tour en deux segments pour un véhicule (1090) à partir d'un andain courant jusqu'à un andain suivant dans une zone de travail en suivant une ligne de guidage sur une tête de champs au niveau d'une périphérie de la zone de travail ;
en réponse à la réception de la demande, la réception d'informations concernant l'andain courant, comportant une position de fin de l'andain courant, d'informations concernant l'andain suivant, d'informations concernant la ligne de guidage et d'une position courante du véhicule ;
la détermination d'une trajectoire du demi-tour sur la base des informations concernant l'andain courant, des informations concernant l'andain suivant, des informations concernant la ligne de guidage et de la position courante du véhicule, la trajectoire comportant un premier segment (1030), un deuxième segment (1040) et au moins deux segments initiaux (1010, 1020), dans lequel :

un premier segment initial (1110) des au moins deux segments initiaux commence à la position courante et s'achève à la position de fin de l'andain courant et un second segment initial (1020) des au moins deux segments initiaux commence à la position de fin de l'andain courant et s'achève à la position de début (1012) du demi-tour ;
le premier segment (1030) commence à partir d'une position de début (1012) du demi-tour au niveau de l'andain courant et s'achève à une position intermédiaire ;
le deuxième segment (1040) commence à partir de la position intermédiaire et s'achève à une position de fin du demi-tour à l'andain suivant, dans lequel au moins une partie du deuxième segment de la trajectoire suit la ligne de guidage ; et
dans lequel le véhicule passe de la marche avant à la marche arrière, ou l'inverse, lorsque de véhicule passe de chaque segment au segment suivant ; et
la transmission de la trajectoire à un dispositif de commande du véhicule afin d'exécuter le demi-tour en suivant successivement le premier segment initial (1010), le second segment initial (1020), le premier segment (1030) et le deuxième segment (1040) de la trajectoire.

2. Procédé selon la revendication 1, dans lequel la demande spécifie que le demi-tour doit être compris dans une limite, le procédé comprenant, en outre :

la réception d'informations de la limite ;
dans lequel la détermination de la trajectoire du demi-tour est, en outre, réalisée sur la base des informations concernant la limite et dans lequel la trajectoire du demi-tour est confinée à l'intérieur de la limite.

3. Procédé selon la revendication 1, dans lequel la demande spécifie le déplacement vers une position de début de l'andain suivant après le demi-tour, et dans lequel la détermination de la trajectoire du demi-tour est, en outre, réalisée sur la base de la position de début de l'andain suivant et la trajectoire comporte, en outre :
un segment final qui commence à partir de la position de fin du demi-tour et s'achève à la position de début de l'andain suivant, dans lequel le segment final est destiné à être réalisé après réalisation du premier segment et du deuxième segment.

4. Procédé selon la revendication 1, dans lequel la détermination de la trajectoire du demi-tour est réalisée de telle sorte qu'une distance totale parcourue par le véhicule le long du premier segment et du deuxième segment est réduite au minimum.

5. Procédé selon la revendication 1, dans lequel :

en réponse à la détermination du fait que le véhicule traverse l'andain courant en marche avant, avant le demi-tour, la détermination des réglages de vitesse du véhicule pendant le demi-tour est faite de telle sorte que le véhicule traverse le premier segment en marche avant et traverse le deuxième segment en marche arrière ; et
en réponse à la détermination du fait que le véhicule traverse l'andain courant en marche arrière, avant le demi-tour, la détermination des réglages de vitesse du véhicule pendant le demi-tour est faite de telle sorte que le véhicule traverse le premier segment en marche arrière et traverse le deuxième segment en marche avant.

6. Procédé selon la revendication 1, dans lequel la trajectoire comporte une pluralité de points, chaque point respectif de la pluralité de points est **caractérisé par** des coordonnées spatiales bidimensionnelles respectives, un angle d'orientation respectif et une courbure respective du véhicule et le procédé comprenant, en outre :

   la détermination d'un profil de vitesse le long de la trajectoire, le profil de vitesse comportant une vitesse respective pour chaque point respectif de la pluralité de points ; et
   la transmission du profil de vitesse au dispositif de commande du véhicule.

7. Procédé selon la revendication 1, dans lequel un outillage est relié au véhicule et le procédé comprend, en outre :

   la détermination d'un profil d'outillage le long de la trajectoire ; et
   la transmission du profil d'outillage au dispositif de commande du véhicule.

8. Procédé de planification de trajet destiné à un véhicule autonome, le procédé comprenant :

   la réception d'une demande de demi-tour à trois segments pour un véhicule (1190) à partir d'un andain courant vers un andain suivant dans une zone de travail, la demande spécifiant le demi-tour afin de suivre une ligne de guidage sur une tête de champs au niveau d'une périphérie de la zone de travail ;
   en réponse à la réception de la demande, la réception d'informations concernant l'andain courant comportant une position de fin de l'andain courant (1114), d'informations concernant l'andain suivant, d'informations concernant la ligne de guidage et d'une position courante du véhicule ;
   la détermination d'une trajectoire du demi-tour sur la base des informations concernant l'andain courant, des informations concernant l'andain suivant, des informations concernant la ligne de guidage et de la position courante du véhicule, la trajectoire comportant un premier segment, un deuxième segment, un troisième segment et au moins de deux segments initiaux, dans lequel :

      un premier segment initial (1110) des au moins deux segments initiaux commence à la position courante et s'achève à la position de fin de l'andain courant (1114) et un deuxième segment initial (1120) des au moins deux segments initiaux commence à la position de fin de l'andain courant (1114) et s'achève à la position de début (1112) du demi-tour ; le premier segment commence à partir d'une position de début (1112) du demi-tour au niveau de l'andain courant et s'achève à une première position intermédiaire sur la ligne de guidage ;
le deuxième segment commence à partir de la première position intermédiaire, se déplaçant le long de la ligne de guidage, et s'achève à une seconde position intermédiaire sur la ligne de guidage ;
le troisième segment commence à partir de la seconde position intermédiaire et s'achève à une position de fin (1142) du demi-tour au niveau de l'andain suivant ; et
dans lequel le véhicule passe de la marche en arrière à la marche en avant, ou l'inverse, lorsque de véhicule passe de chaque segment au segment suivant ; et
la transmission de la trajectoire à un dispositif de commande du véhicule afin d'exécuter le demi-tour en suivant successivement le premier segment initial (1110), le second segment initial (1120), le premier segment, le deuxième segment et le troisième segment de la trajectoire.

9. Procédé selon la revendication 8, dans lequel la demande spécifie le déplacement vers une position de début de l'andain suivant après le demi-tour, et dans lequel la détermination de la trajectoire du demi-tour est, en outre, réalisée sur la base de la position de début de l'andain suivant et la trajectoire comporte, en outre :
un segment final qui commence à partir de la position de fin du demi-tour et s'achève à la position de début de l'andain suivant, dans lequel le segment final est destiné à être réalisé après réalisation du premier segment, du deuxième segment, et du troisième segment.

10. Procédé selon la revendication 8, dans lequel :

   sur le premier segment de la trajectoire, le véhicule se déplace à partir de la position de début du demi-tour vers la ligne de guidage et dans une direction orientée vers l'andain suivant ;
   sur le deuxième segment de la trajectoire, le véhicule se déplace à partir de la première position intermédiaire le long de la ligne de guidage dans une direction orientée vers l'andain courant, vers la seconde position intermédiaire ; et
   sur le troisième segment de la trajectoire, le véhicule se déplace à partir de la seconde position intermédiaire vers l'andain suivant.

11. Procédé selon la revendication 8, dans lequel :

sur le premier segment de la trajectoire, le véhicule se déplace à partir de la position de début du demi-tour vers la ligne de guidage et dans une direction opposée par rapport à l'andain suivant ;

sur le deuxième segment de la trajectoire, le véhicule se déplace à partir de la première position intermédiaire le long de la ligne de guidage vers l'andain suivant jusqu'à la seconde position intermédiaire ; et

sur le troisième segment de la trajectoire, le véhicule se déplace à partir de la seconde position intermédiaire vers l'andain suivant.

12. Procédé selon la revendication 8, dans lequel la détermination de la trajectoire du demi-tour est réalisée de telle sorte qu'une distance totale parcourue par le véhicule le long du premier segment, du deuxième segment et du troisième segment est réduite au minimum.

**FIG. 1**

**FIG. 2A**

**FIG. 2B**

**FIG. 2C**

**FIG. 3A**

**FIG. 3B**

**FIG. 3C**

366
364
362
354
350
370

20

**FIG. 4A**

**FIG. 4B**

**FIG. 4C**

**FIG. 5A**

**FIG. 5B**

**FIG. 6A**

**FIG. 6B**

**FIG. 7A**

**FIG. 7B**

**FIG. 8A**

**FIG. 8B**

**FIG. 8C**

**FIG. 9A**

**FIG. 9B**

FIG. 10

**FIG. 11**

**FIG. 12**

FIG. 13A

FIG. 13B

**FIG. 13C**

**FIG. 13D**

**FIG. 14**

**FIG. 15A**

**FIG. 15B**

point-to-point

**FIG. 16A**

point-to-linestring

**FIG. 16B**

linestring-to-point

**FIG. 16C**

linestring-to-linestring

**FIG. 16D**

**FIG. 17**

EP 3 903 556 B1

1800

receiving a request for a two-segment turn of a vehicle from a current swath to a next swath in a work area — 1802

in response to receiving the request, receiving information of the current swath; and receiving information of the next swath — 1804

determining a trajectory of the turn based on the information of the current swath and the information of the next swath, the trajectory including a first segment and a second segment, wherein the first segment starts from a beginning position of the turn at the current swath and ends at an intermediate position; and the second segment starts from the intermediate position and ends at an ending position of the turn at the next swath, and wherein the vehicle changes from a forward gear to a reverse gear, or vice versa, as the vehicle transitions from the first segment to the second segment — 1806

outputting the trajectory to a control system of the vehicle for executing the turn by following the first segment and the second segment of the trajectory successively — 1808

## FIG. 18

1900

receiving a request for a three-segment turn of a vehicle from a current swath to a next swath in a work area, the request specifying the turn to follow a guidance line in a headland at a periphery of the work area ——1902

in response to receiving the request, receiving information of the current swath, information of the next swath, and information of the guidance line ——1904

determining a trajectory of the turn based on the information of the current swath, the information of the next swath, and the information of the guidance line, the trajectory including a first segment, a second segment, and a third segment, wherein the first segment starts from a beginning position of the turn at the current swath and ends at a first intermediate position on the guidance line, the second segment starts from the first intermediate position, moving along the guidance line, and ends at a second intermediate position on the guidance line, and the third segment starts from the second intermediate position and ends at an ending position of the turn at the next swath ——1906

outputting the trajectory to a control system of the vehicle for executing the turn by following the first segment, the second segment, and the third segment of the trajectory successively ——1908

**FIG. 19**

2000

```
┌─────────────────────────────────────────────┐
│  receiving a request for a turn of a vehicle │
│  from a current swath to a next swath in a   │     2002
│  work area, the work area having a headland  │
│  at a periphery thereof, the headland        │
│  characterized by a guidance line therethrough│
└─────────────────────────────────────────────┘
                      │
                      ▼
┌─────────────────────────────────────────────┐
│  in response to receiving the request,       │
│  receiving information of the current swath,  │     2004
│  information of the next swath, and           │
│  information of the guidance line             │
└─────────────────────────────────────────────┘
                      │
                      ▼
┌─────────────────────────────────────────────┐
│  determining a trajectory of the turn based  │
│  on the information of the current swath, the │
│  information of the next swath, and the       │
│  information of the guidance line, the        │     2006
│  trajectory including one or more segments,   │
│  at least a portion of a first segment of the │
│  one or more segments following the guidance  │
│  line in the headland                         │
└─────────────────────────────────────────────┘
                      │
                      ▼
┌─────────────────────────────────────────────┐
│  outputting the trajectory to a control      │     2008
│  system of the vehicle for executing the turn │
└─────────────────────────────────────────────┘
```

**FIG. 20**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019146513 A1

- US 2017144702 A1